# EUROPÄISCHE PATENTSCHRIFT

(11) **EP 0 508 295 B1**
(45) Veröffentlichungstag und Bekanntmachung des Hinweises auf die Patenterteilung: **17.01.1996**
(21) Anmeldenummer: 92105613.1
(22) Anmeldetag: 01.04.1992
(51) Int. Cl.: C04B 37/02

(54) **Metall-Keramik-Verbindung**
Metal-ceramic joint
Joint métal-céramique

(30) Priorität: 06.04.1991 DE 4111189
(43) Veröffentlichungstag der Anmeldung: 14.10.1992
(73) Patentinhaber: Hoechst CeramTec Aktiengesellschaft, D-95100 Selb (DE)
(72) Erfinder: Do-Thoi, Tha, W-8505 Röthenbach/P (DE); Stingl, Peter, Dr., W-8560 Lauf-Kuhnhof (DE)
(74) Vertreter: Hoffmann, Peter, Dipl.-Chem.

(56) Entgegenhaltungen:
- EP-A- 0 356 678
- DATABASE WPIL Section Ch, Week 8216, Derwent Publications Ltd., London, GB; Class L02, AN 82-12819E & JP-A-57003773

## Beschreibung

Die vorliegende Erfindung betrifft ein Verfahren zum Aufbringen eines Hartlots bestehend aus Silber und Kupfer mit einer Bruttozusammensetzung von Silber/Kupfer im Bereich von 75:25 bis 70:30 und einer Gesamtschichtdicke von 30 bis 100 µm auf metallisierte Keramik unter Verwendung chemischer oder galvanischer Abscheidungsprozesse.

Das Problem, eine gasdichte und haftfeste Verbindung zwischen Metallteilen, insbesondere Metallelektroden aus Kupfer, ®Vacon, Vacodil, Niob oder Stahl, und isolierenden Keramikteilen, insbesondere Aluminiumoxid, zu schaffen, tritt besonders bei der Herstellung von elektronischen Bauteilen wie Überspannungsableitern, Gehäusen für Thyristoren oder Vakuumschaltrohren auf. Üblicherweise wird dieses Problem durch ein mehrstufiges Verfahren gelöst. Im ersten Schritt werden die mit dem Metall zu verbindenden Keramikoberflächen zunächst nach dem klassischen Molybdän/Mangan- oder Wolfram-Titan-Metallisierungsverfahren metallisiert. Die entstehende dünne Metallschicht mit einer Dicke im Bereich von 2 bis 30 µm wird in feuchter, reduzierender Atmosphäre bei Temperaturen von 1200°C bis 1500°C eingebrannt. Auf diese Weise läßt sich eine gute Haftung zwischen Keramikgrundwerkstoff und Metallisierung erreichen. Anschließend wird üblicherweise auf die Metallisierungsschicht ein Nickel- oder Kupferüberzug galvanisch oder chemisch aufgetragen. Der Überzug aus Nickel oder Kupfer ist etwa 0,5 bis 5 µm dick und hat lediglich die Aufgabe, die Benetzung der metallisierten Keramik durch das geschmolzene Lot zu ermöglichen. Im nächsten Arbeitsgang werden die zu lötenden Bauteile in einer Lötlehre aus Graphit montiert. Auf die metallisierte Keramikoberfläche wird eine Lotscheibe gelegt. Das mit der Keramik zu verbindende Metallteil wird auf die Lotscheibe aufgesetzt und mit Hilfe der Lötlehre exakt zentriert. Lötlehre einschließlich Keramik, Metallteil und Lotscheibe werden in Schutzgas oder Vakuum auf Temperaturen zwischen 750°C und 1200°C aufgeheizt. Bei der Löttemperatur werden Metall- und Keramikoberfläche von dem geschmolzenen Lot benetzt. Das nach der Abkühlung erstarrte Lot bewirkt eine haftfeste und gasdichte Verbindung zwischen den Metall- und Keramikteilen. Als Hartlot werden in der Elektronik häufig Silber/Kupfer-Legierungen eingesetzt. In Abhängigkeit von dem Gewichtsanteil von Kupfer läßt sich der Schmelzpunkt dieses Lotes im Bereich von 780°C (Eutektikum) bis etwa 1070°C (reines Kupfer) variieren.

Die chemischen und physikalischen Eigenschaften (Wärmeausdehnung) des Hartlotmaterials müssen auf die Metallisierung der Keramik und die Eigenschaften des Metallteiles abgestimmt sein. Der Schmelzpunkt des Lots (Einstoff-System oder Eutektikum,) bzw. sein Schmelzbereich (Mehrstoffsystem) muß im Bereich der zulässigen Verarbeitungstemperatur liegen.

Nachteilig an diesem seit Jahrzehnten betriebenen Verfahren ist, daß das Einpassen der Lotteile (z.B. Lotscheiben) bei der Montage ausgesprochen arbeitsintensiv ist und besonderes manuelles Geschick des Betriebspersonals erfordert. Eine Automatisierung der Montage ist nicht möglich. Dies gilt insbesondere bei geometrisch komplizierten Lötstellen oder bei Bauteilen mit mehreren Lötstellen. Weitere Schwierigkeiten ergeben sich dadurch, daß in der Elektronik häufig kleine Bauteile aus metallisierter Keramik in hohen Stückzahlen benötigt werden.

Aus der DE-OS 38 24 900, auf die hier ausdrücklich hingewiesen wird, ist bereits ein Verfahren zum chemischen oder galvanischen Aufbringen einer Lotschicht bestehend aus mindestens zwei Schichten von Kupfer und Silber auf eine metallisierte Keramik bekannt. Die Gesamtschichtdicke beträgt dort 15 bis 300 µm. Besonders bevorzugt wegen der niedrigen Schmelzpunkte sind Silber/Kupfer-Verhältnisse in der Nähe des Eutektikums (Ag/Cu = 75:25 bis 70:30).

Es hat sich gezeigt, daß bei sehr kurzen Lötzeiten auf den einzelnen Metallschichten das Eutektikum sich nicht in ausreichender Menge durch Diffusion bildet, so daß Vakuumdichtigkeit und Haftfestigkeit ungenügend sind.

Aufgabe der Erfindung war es, ein neues Verfahren zum Aufbringen einer Lötschicht zu entwickeln, das sich einerseits eignet, um auf automatisch arbeitenden Montageaggregaten eingesetzt zu werden, das aber andererseits zu zufriedenstellender Vakuumdichtigkeit und ausreichender Haftfestigkeit trotz kurzer Lötzeiten führt.

Gelöst wurde diese Aufgabe durch ein Verfahren der eingangs genannten Gattung, dessen kennzeichnendes Merkmal darin zu sehen ist, daß auf der metallisierten Keramik abwechselnd Kupferschichten und Silberschichten aufgetragen werden, wobei die Anzahl der Schichten mindestens 6 ist, die Einzelschichtdicken im Bereich von 5 bis 10 µm liegen und die Gesamtschichtdicke bis zu 100 µm beträgt. Die Gesamtdicke der Lotschicht beträgt vorzugsweise bis zu 80 µm.

Das Verfahren eignet sich zur Vorbelotung von metallisierten Keramikteilen, vorzugsweise Aluminiumoxidteilen. Es ist auch möglich, auf die Metallisierung zunächst noch eine Schicht aus Nickel mit einer Schichtdicke von 0,5 bis maximal 5 µm aufzubringen.

## Patentansprüche

1. Verfahren zum chemischen oder galvanischen Aufbringen einer Lotschicht bestehend aus Kupfer und Silber mit einer Bruttozusammensetzung von Silber/Kupfer von 75:25 bis 70:30 auf einer metallisierten Keramik, dadurch gekennzeichnet, daß auf der metallisierten Keramik abwechselnd Kupferschichten und Silberschichten aufgetragen werden, wobei die Anzahl der aufgetragenen Schichten mindestens 6 ist, die Einzelschichtdicken im Bereich von 5 bis 10 µm liegen und die Gesamtschichtdicke bis zu 100 µm beträgt.

2. Verfahren nach Anspruch 1, dadurch gekennzeichnet, daß die Gesamtdicke der Lotschicht bis zu 80 µm beträgt.

3. Verfahren nach einem der Ansprüche 1 oder 2, dadurch gekennzeichnet, daß auf die Metallisierung zunächst noch eine Schicht aus Nickel aufgebracht wird.

4. Verfahren nach Anspruch 3, dadurch gekennzeichnet, daß die Schicht aus Nickel eine Schichtdicke im Bereich von 0,5 bis 5 µm besitzt.

5. Verfahren nach einem der Ansprüche 1 bis 4, dadurch gekennzeichnet, daß als Keramik eine Aluminiumoxidkeramik eingesetzt wird.

## Claims

1. A process for chemically depositing or electro-depositing a solder layer consisting of copper and silver and having an overall composition of silver/copper of from 75:25 to 70:30 on a metallized ceramic, which comprises applying copper layers and silver layers alternately to the metallized ceramic, the number of layers applied being at least 6, the individual layer thicknesses being in the range from 5 to 10 µm and the total layer thickness being up to 100 µm.

2. The process as claimed in claim 1, wherein the total thickness of the solder layer is up to 80 µm.

3. The process as claimed in either of claims 1 or 2, wherein a layer of nickel is first deposited, in addition, on the metallization.

4. The process as claimed in claim 3, wherein the nickel layer has a layer thickness in the range from 0.5 to 5 µm.

5. The process as claimed in any of claims 1 to 4, wherein an aluminum oxide ceramic is used as ceramic.

## Revendications

1. Procédé pour le dépôt chimique ou galvanique d'une couche de métal d'apport de brasage se composant de cuivre et d'argent avec une composition brute d'argent/cuivre de 75:25 à 70:30 sur une céramique métallisée, caractérisé en ce que des couches de cuivre et des couches d'argent sont appliquées alternativement sur la céramique métallisée, le nombre de couches appliquées étant d'au moins 6, les épaisseurs des couches individuelles étant situées dans le domaine allant de 5 à 10 µm et l'épaisseur totale de la couche faisant jusqu'à 100 µm.

2. Procédé selon la revendication 1, caractérisé en ce que l'épaisseur totale de la couche de métal d'apport de brasage fait jusqu'à 80 µm.

3. Procédé selon la revendication 1 ou 2, caractérisé en ce qu'une couche de nickel est encore introduite d'abord sur la métallisation.

4. Procédé selon la revendication 3, caractérisé en ce que la couche de nickel possède une épaisseur de couche comprise dans le domaine allant de 0,5 à 5 µm.

5. Procédé selon l'une des revendications 1 à 4, caractérisé en ce que comme céramique est utilisée une céramique en oxyde d'aluminium.
